# EUROPEAN PATENT APPLICATION

(11) **EP 4 514 029 A1**
(43) Date of publication of application: **26.02.2025**
(21) Application number: 23791591.3
(22) Date of filing: 20.03.2023
(51) Int. Cl.: H04W 72/1268, H04W 72/0446

(54) **TERMINAL, BASE STATION, COMMUNICATION METHOD, AND INTEGRATED CIRCUIT**

(30) Priority: 21.04.2022 JP 2022070126
(71) Applicant: Panasonic Intellectual Property Corporation of America, Torrance, CA 90504 (US)
(72) Inventor: YAMAMOTO, Tetsuya, Kadoma-shi, Osaka 571-0057 (JP); SUZUKI, Hidetoshi, Kadoma-shi, Osaka 571-0057 (JP)
(74) Representative: Grünecker Patent- und Rechtsanwälte PartG mbB
(86) International application number: PCT/JP2023/010997
(87) International publication number: WO 2023/203938

(57) **Abstract**

This terminal comprises: a reception circuit that, with respect to a first data signal and a second data signal of which at least one is repeatedly transmitted, receives first control information for scheduling the first data signal, and receives, after the first control information, second control information for scheduling the second data signal; and a control circuit which, on the basis of a first timing related to transmission of the first data signal and a second timing related to transmission of the second data signal, determines whether scheduling is a prescribed scheduling or not.

## Description

### Technical Field

The present disclosure relates to a terminal, a base station, a communication method, and an integrated circuit.

### Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

### Citation List

### Non-Patent Literature (hereinafter referred to as "NPL")

NPL 1
   3GPP TS38.104 V15.16.0, "NR Base Station (BS) radio transmission and reception (Release 15)," December 2021.
NPL 2
   RP-202928, "New WID on NR coverage enhancements," China Telecom, December 2020.
NPL 3
   3GPP TS38.211 V17.1.0, "NR Physical channels and modulation (Release 17)," March 2022.
NPL 4
   3GPP TS38.212 V17.1.0, "NR Multiplexing and channel coding (Release 17)," March 2022.
NPL 5
   3GPP TS38.213 V17.1.0, "NR Physical layer procedures for control (Release 17)," March 2022.
NPL 6
   3GPP TS38.214 V17.1.0, "NR Physical layer procedures for data (Release 17)," March 2022.

### Summary of Invention

There is, however, room for consideration on a method for transmitting a signal in the uplink.

A non-limiting embodiment of the present disclosure facilitates providing a terminal, a base station, a communication method, and an integrated circuit each capable of improving the reception performance of a signal in the uplink.

A terminal according to an embodiment of the present disclosure includes: reception circuitry, which, in operation, receives first control information scheduling a first data signal and receives second control information scheduling a second data signal later than the first control information for the first data signal and the second data signal, at least one of the first data signal and the second data signal being transmitted repeatedly; and control circuitry, which, in operation, determines whether the scheduling is defined scheduling, based on a first timing for a transmission of the first data signal and a second timing for a transmission of the second data signal.

It should be noted that general or specific embodiments may be implemented as a system, a method, an integrated circuit, a computer program, a storage medium, or any selective combination thereof.

According to an embodiment of the present disclosure, a signal can be appropriately transmitted in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary In-order scheduling and Out-of-order scheduling;
FIG. 2 illustrates an exemplary Physical Uplink Shared Channel (PUSCH) repetition Type A with available slot counting;
FIG. 3 is a block diagram illustrating an exemplary configuration of a part of a base station;
FIG. 4 is a block diagram illustrating an exemplary configuration of a part of a terminal;
FIG. 5 is a block diagram illustrating an exemplary configuration of the base station;
FIG. 6 is a block diagram illustrating an exemplary configuration of the terminal;
FIG. 7 is a flowchart illustrating an operation example of the terminal;
FIG. 8 illustrates an exemplary In-order scheduling and Out-of-order scheduling;
FIG. 9 illustrates an exemplary In-order scheduling and Out-of-order scheduling;
FIG. 10 illustrates an exemplary In-order scheduling and Out-of-order scheduling;
FIG. 11 illustrates an exemplary In-order scheduling and Out-of-order scheduling;
FIG. 12 illustrates an exemplary In-order scheduling and Out-of-order scheduling;
FIG. 13 illustrates an exemplary In-order scheduling and Out-of-order scheduling;
FIG. 14 illustrates an exemplary architecture for a 3GPP NR system;
FIG. 15 schematically illustrates functional split between NG-RAN and 5GC;
FIG. 16 is a sequence diagram of Radio Resource Control (RRC) connection setup/reconfiguration procedure;
FIG. 17 schematically illustrates usage scenarios of enhanced Mobile BroadBand (eMBB), massive Machine Type Communications (mMTC), and Ultra Reliable and Low Latency Communications (URLLC); and
FIG. 18 is a block diagram illustrating an exemplary 5G system architecture for a non-roaming scenario.

### Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as Frequency Range 2 (FR2)) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in 3GPP Release 17 (e.g., referred to as "Rel. 17"), a method of improving the coverage in NR has been studied (e.g., see NPL 2).

In NR, a terminal (for example, also referred to as user equipment (UE)) transmits/receives data in accordance with, for example, resource allocation indicated by a layer 1 control signal (for example, Downlink Control Information (DCI)) on a downlink control channel (for example, Physical Downlink Control Channel (PDCCH)) from a base station (for example, also referred to as gNB) or Radio Resource Control (RRC) that is layer 3 (for example, see NPLs 3 to 6).

In the uplink (Uplink (UL)), for example, a terminal transmits an uplink data channel (for example, Physical Uplink Shared Channel (PUSCH)) in accordance with a resource allocation from a base station (for example, Grant or UL grant). The resource allocation information included in at least one of the DCI and RRC may include, for example, information on a time domain resource on which PUSCH is transmitted. For example, the information on the time domain resource may include information on the timing until the terminal transmits the PUSCH from the slot in which the PDCCH is received (for example, K2), the leading symbol position of the PUSCH in the slot, or information on the number of symbols for the PUSCH transmission.

### [Regarding In-order Scheduling and Out-of-order scheduling]

In NR Release 15 or NR Release 16 (referred to as "NR Rel. 15/16", for example), the scheduling of any two Hybrid Automatic Repeat reQuest (HARQ) process ID#A and HARQ process ID#B is defined.

For example, in a case where a DCI (also referred to as PDCCH#A, for example) for scheduling PUSCH transmission#A (corresponding to HARQ process ID#A, for example) is received temporally earlier than a DCI (also referred to as PDCCH#B, for example) for scheduling PUSCH transmission#B (corresponding to HARQ process ID#B, for example) in the terminal, the terminal does not assume that PUSCH#B is scheduled to be transmitted earlier than PUSCH#A.

Hereinafter, in a case where the scheduling DCI for PUSCH transmission#A is received temporally before the scheduling DCI for PUSCH transmission#B for any two HARQ process ID#A and HARQ process ID#B, PUSCH#B being scheduled to be transmitted earlier than PUSCH#A to the terminal is referred to as "Out-of-order scheduling."

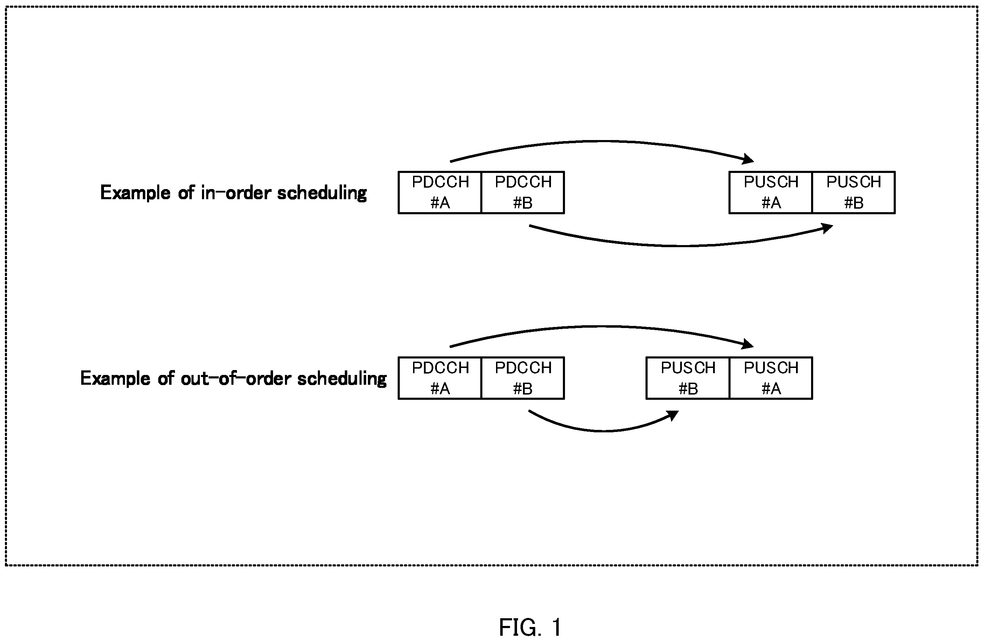

FIG. 1 illustrates an example of Out-of-order scheduling and an example of normal scheduling (referred to as "In-order scheduling", for example).

In the standard of NR Rel. 15/16, a terminal (UE) not assuming Out-of-order scheduling is defined as follows (see, for example, NPL 6).

"For any two HARQ process IDs in a given scheduled cell, if the UE is scheduled to start a first PUSCH transmission starting in symbol j by a PDCCH ending in symbol i, the UE is not expected to be scheduled to transmit a PUSCH starting earlier than the end of the first PUSCH by a PDCCH that ends later than symbol i."

Since the terminal does not assume Out-of-order scheduling, the terminal operation in a case of Out-of- order scheduling is not defined in the standard. For this reason, the base station is expected to schedule PUSCH so as to avoid Out-of-order scheduling, for example.

### [Repetition]

In the uplink transmission of NR, a method for transmitting PUSCH using a plurality of slots (also referred to as Repetition or repetition transmission) is supported. In a case where Repetition is applied, information on the time domain resource for PUSCH transmission may include information on the number of Repetitions.

For example, in NR Rel. 15/16, two PUSCH repetition methods are defined for PUSCH Repetition (see, for example, NPL 6).

The first PUSCH repetition method is Repetition in a slot unit, and the same time resource allocation is applied to a plurality of continuous slots. Hereinafter, this PUSCH repetition method will be referred to as "PUSCH repetition Type A with continuous slot counting."

The second PUSCH repetition method is Repetition by which one or a plurality of PUSCHs repetition transmission is possible within one slot. Hereinafter, this PUSCH repetition method will be referred to as "PUSCH repetition Type B". In PUSCH repetition Type B, the base station may indicate, to the terminal, for example, a time domain resource and the number of repetitions for the first (initial) PUSCH transmission. In the time domain resource allocation for the second and each subsequent PUSCH transmission, for example, time domain resources corresponding to symbols that are continuous with and have the same number of symbols as symbols for the previous PUSCH transmission may be allocated to the PUSCH.

In PUSCH repetition Type A with continuous slot counting, the number of repetition slots may be, for example, a value counted based on continuous slots. In NR Release 17 (for example, referred to as "NR Rel. 17"), a method has been introduced in which the number of the repetition slots is set to a value counted based on an uplink slot (available slot) that can be used for PUSCH transmission, as a functional expansion of PUSCH repetition Type A (see, for example, NPLs 2 and 6). Hereinafter, this PUSCH repetition method will be referred to as "PUSCH repetition Type A with available slot counting."

### Repetition has been described above.

In the PUSCH repetition Type A with available slot counting, the number of repetition slots is counted based on an uplink slot that is available for PUSCH transmission. Further, the method for determining the uplink slot available for PUSCH transmission may depend on, for example, a slot format (Slot Format Indication (SFI)) indication configured in advance by RRC (for example, semi-static SFI), and information on the time resource allocation for PUSCH transmission.

In this case, the terminal may determine whether to actually transmit PUSCH in each uplink slot that is available for PUSCH transmission, based on a dynamic indication (for example, an indication by DCI), for example. For example, the dynamic indication may be a dynamic SFI indication (dynamic SFI), an uplink transmission cancellation indication (UpLink Cancellation Indication (UL CI)), an uplink transmission allocation with a high priority, and the like. Even in a case where the terminal does not transmit PUSCH in any slot of the uplink slot that is available for PUSCH transmission based on the dynamic indication, the slot may be counted as the number of repetition slots.

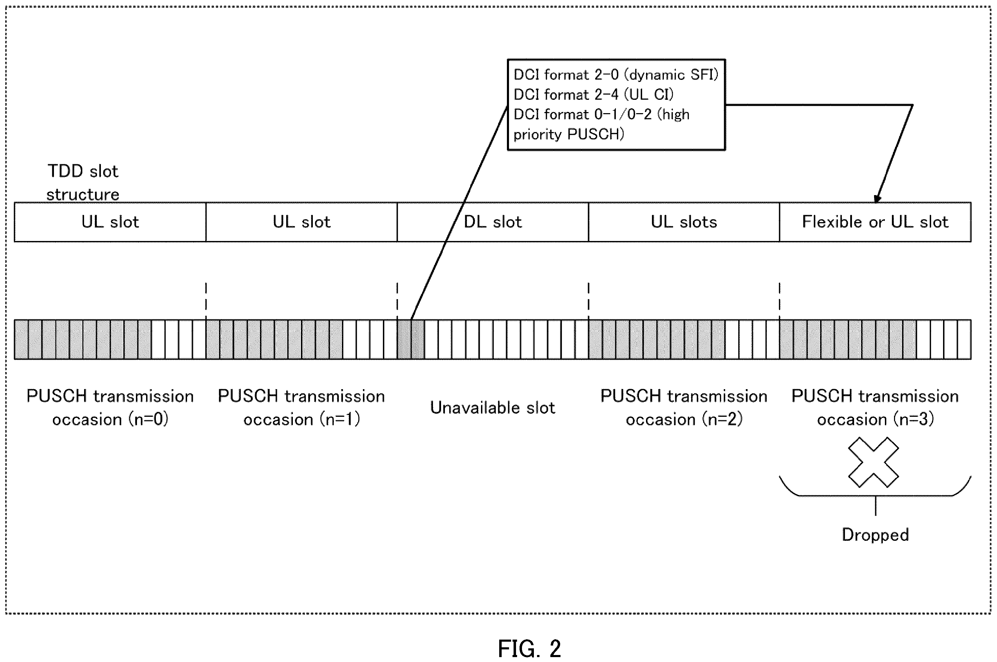

FIG. 2 illustrates an example in which, in an uplink slot (for example, PUSCH transmission occasion n=0 to 3) available for PUSCH transmission, PUSCH is not transmitted (for example, when PUSCH transmission is dropped) in some slots (slots corresponding to, for example, PUSCH transmission occasion n=3) by a dynamic indication (for example, indication by DCI). In this case, the number of slots in which PUSCH is actually transmitted is three, but the number of repetition slots in PUSCH repetition Type A with available slot counting may be four, including the slot corresponding to PUSCH transmission occasion n=3.

In NR Rel. 15/16, the criterion for determining whether PUSCH transmission is "In-order scheduling" or "Out-of-order scheduling" is "whether PUSCH transmission#B is scheduled to be transmitted earlier than the end (the end of the first PUSCH) of PUSCH transmission#A when scheduling DCI of PUSCH transmission#A (HARQ process ID#A, or first PUSCH) is received temporally earlier than scheduling DCI of PUSCH transmission#B (HARQ process ID#B)."

For example, when PUSCH transmission#B is scheduled to be transmitted earlier than the end (the end of the first PUSCH) of PUSCH transmission#A, the scheduling is determined to be "Out-of-order scheduling." Further, when PUSCH transmission#B is scheduled to be transmitted later than the end (the end of the first PUSCH) of PUSCH transmission#A, the scheduling is determined to be "In-order scheduling."

In the PUSCH repetition Type A with available slot counting, the slot (or symbol) in which PUSCH transmission is started and the last slot (or symbol) of the PUSCH transmission are determined based on the uplink slot available for PUSCH transmission. Further, there is a case where PUSCH is not transmitted in a certain slot (for example, in a case where PUSCH transmission is dropped) by the dynamic indication in the uplink slot that is available for PUSCH transmission.

For this reason, for example, in a case where PUSCH transmission in the first slot of the uplink slots that are available for PUSCH transmission is dropped, the slot in which the PUSCH transmission is actually started may be the uplink slot available for PUSCH transmission following the first slot.

Further, for example, in a case where PUSCH transmission in the last slot of the uplink slots that are available for PUSCH transmission is dropped, the slot in which the PUSCH transmission is actually ended may be a slot before the last slot.

For example, there is room for study on configurations of the "timing of the end of PUSCH transmission#A (the end of the first PUSCH)" and "timing at which PUSCH transmission#B is scheduled" for determining "whether PUSCH transmission#B is scheduled to be transmitted earlier than the end of PUSCH transmission#A (the end of the first PUSCH)," which serves as a criteria for determining whether the scheduling is Out-of-order scheduling when PUSCH repetition Type A with available slot counting is applied to PUSCH transmission.

In a non-limiting embodiment of the present disclosure, a method for appropriately determining whether the scheduling is Out-of-order scheduling when PUSCH repetition Type A with available slot counting is applied to PUSCH transmission.

For example, in a non-limiting embodiment of the present disclosure, the timing of the end of PUSCH transmission#A (first PUSCH) (the end of the first PUSCH) and the timing at which PUSCH transmission#B is scheduled, which are for determining whether the scheduling is Out-of-order scheduling, are clearly defined in a case where PUSCH repetition Type A with available slot counting is applied to PUSCH transmission. Thus, in a case where PUSCH repetition Type A with available slot counting is applied to either of, or both of, the transmissions of PUSCH#A and PUSCH#B, the terminal can determine whether the allocation of the PUSCH transmission is Out-of-order scheduling.

Hereinafter, non-limiting embodiments of the present disclosure will be described.

### [Overview of Communication System]

A communication system according to each embodiment of the present disclosure includes, for example, at least one base station and at least one terminal.

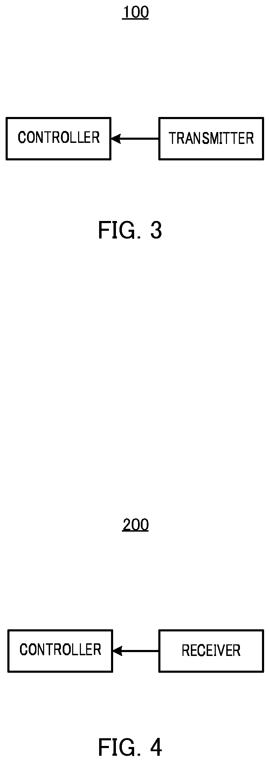

FIG. 3 is a block diagram illustrating an exemplary configuration of a part of base station 100 according to an embodiment of the present disclosure, and FIG. 4 is a block diagram illustrating an exemplary configuration of a part of terminal 200 according to an embodiment of the present disclosure.

In base station 100 illustrated in FIG. 3, a transmitter (corresponding to, for example, transmission circuitry) transmits first control information (for example, PDCCH#A) scheduling a first data signal (for example, PUSCH#A) and transmits second control information (for example, PDCCH#B) scheduling a second data signal (for example, PUSCH#B) later than the first control information for the first data signal and the second data signal at least one of which is transmitted repeatedly. A controller (corresponding to, for example, control circuitry) determines whether the scheduling is defined (or normal) scheduling (for example, In-order scheduling), based on a first timing for a reception of the first data signal (for example, the timing of end of PUSCH reception#A) and a second timing for a reception of the second data signal (for example, the timing at which PUSCH reception#B is scheduled).

In terminal 200 illustrated in FIG. 4, a receiver (corresponding to, for example, reception circuitry) receives first control information (for example, PDCCH#A) scheduling a first data signal (for example, PUSCH#A) and receives second control information (for example, PDCCH#B) scheduling a second data signal (for example, PUSCH#B) later than the first control information for the first data signal and the second data signal at least one of which is transmitted repeatedly. A controller (corresponding to, for example, control circuitry) determines whether the scheduling is defined (or normal) scheduling (for example, In-order scheduling), based on a first timing for a transmission of the first data signal (for example, the timing of end of PUSCH transmission#A) and a second timing for a transmission of the second data signal (for example, the timing at which PUSCH transmission#B is scheduled).

### (Embodiment 1)

### [Configuration of Base Station]

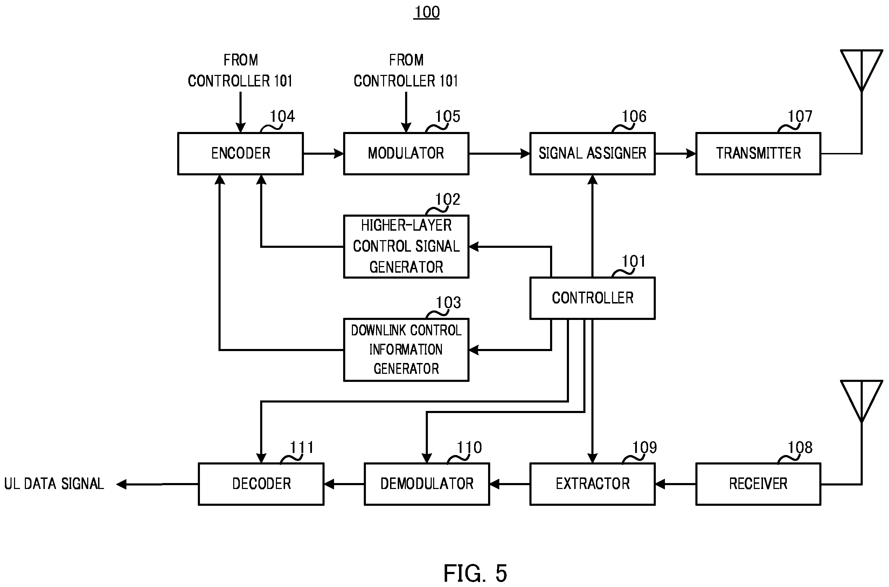

FIG. 5 is a block diagram illustrating an exemplary configuration of base station 100 according to Embodiment 1. In FIG. 5, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, at least one of controller 101, higher-layer control signal generator 102, downlink control information generator 103, encoder 104, modulator 105, signal assigner 106, extractor 109, demodulator 110, and decoder 111 illustrated in FIG. 5 may be included in the controller illustrated in FIG. 3. Further, transmitter 107 illustrated in FIG. 5 may be included in the transmitter illustrated in FIG. 3.

Controller 101 determines information on PUSCH transmission, and outputs the determined information to at least one of higher-layer control signal generator 102 and downlink control information generator 103, for example. The information on the PUSCH transmission may include, for example, time domain resource allocation information (for example, Time Domain Resource Allocation (TDRA)). Further, controller 101 outputs the determined information to extractor 109, demodulator 110, and decoder 111.

Further, when, for example, controller 101 performs scheduling of a plurality (for example, two) of PUSCH transmissions to terminal 200 for PUSCH transmission for terminal 200, controller 101 may perform the scheduling to satisfy normal scheduling (for example, In-order scheduling) (for example, satisfy that the scheduling is not out-of-order scheduling) by the method described later.

Further, controller 101 determines, for example, information on a downlink signal for transmitting a higher-layer control signal or downlink control information (e.g., Modulation and Coding Scheme (MCS) and radio resource allocation), and outputs the determined information to encoder 104, modulator 105, and signal assigner 106. Further, controller 101 outputs the information on a downlink signal (for example, higher-layer control signal) to downlink control information generator 103, for example.

Higher-layer control signal generator 102 generates a higher-layer control signal bit string, for example, based on the information inputted from controller 101, and outputs the higher-layer control signal bit string to encoder 104.

Downlink control information generator 103 generates a downlink control information (for example, DCI) bit string, for example, based on the information inputted from controller 101, and outputs the generated DCI bit string to encoder 104. Note that, the control information may be transmitted to a plurality of terminals.

Encoder 104 encodes the bit string inputted from higher-layer control signal generator 102 or the DCI bit string inputted from downlink control information generator 103, for example, based on the information inputted from controller 101. Encoder 104 outputs the encoded bit string to modulator 105.

Modulator 105 modulates encoded bit string inputted from encoder 104, for example, based on the information inputted from controller 101, and outputs the modulated signal (for example, a symbol string) to signal assigner 106.

Signal assigner 106 maps, for example, based on the information inputted from controller 101 and indicating the radio resource, the symbol string (including, for example, a control signal) inputted from modulator 105 to the radio resource. Signal assigner 106 outputs a signal that has been mapped to a downlink to transmitter 107.

Transmitter 107 performs, for example, transmission waveform generation processing such as orthogonal frequency division multiplexing (OFDM), on a signal inputted, for example, from signal assigner 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108 performs RF processing such as down-conversion or A/D conversion on the uplink signal received from terminal 200 through, for example, an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, based on the information inputted from controller 101, a radio resource portion on which the uplink data signal (for example, PUSCH) is transmitted, from the received signal inputted from receiver 108, and outputs the extracted radio resource portion to demodulator 110.

Demodulator 110 demodulates the uplink data signal (for example, PUSCH) inputted from extractor 109 based on the information inputted from controller 101, for example. Demodulator 110 outputs, for example, the demodulation result to decoder 111.

Decoder 111 performs error correction decoding on the uplink data signal (for example, PUSCH) and obtains a decoded reception bit sequence based on the information inputted from controller 101 and the demodulation result inputted from demodulator 110, for example.

### [Configuration of Terminal]

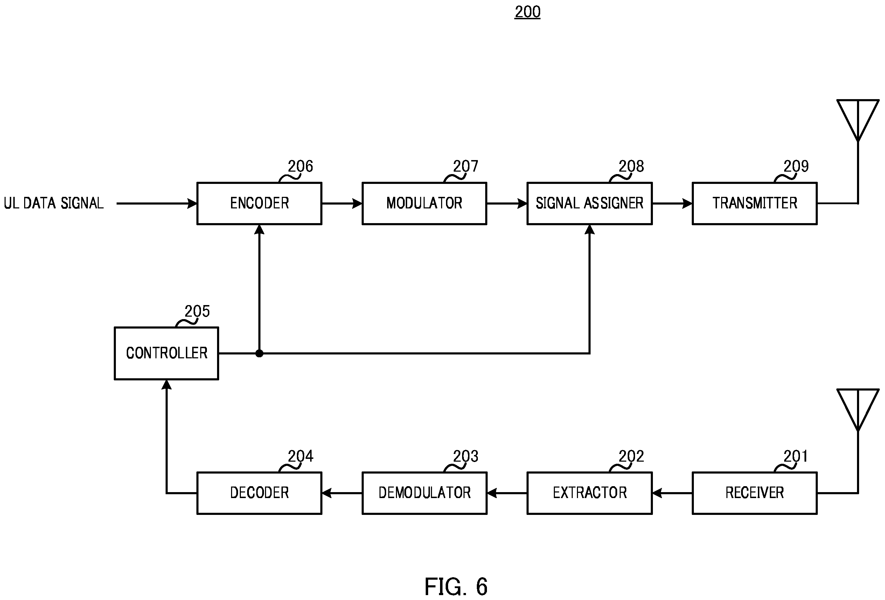

FIG. 6 is a block diagram illustrating an exemplary configuration of terminal 200 according to an exemplary embodiment of the present disclosure. For example, in FIG. 6, terminal 200 includes receiver 201, extractor 202, demodulator 203, decoder 204, controller 205, encoder 206, modulator 207, signal assigner 208, and transmitter 209.

Note that, at least one of extractor 202, demodulator 203, decoder 204, controller 205, encoder 206, modulator 207, and signal assigner 208 illustrated in FIG. 6 may be included in the controller illustrated in FIG. 4. Further, receiver 201 illustrated in FIG. 6 may be included in the receiver illustrated in FIG. 4.

Receiver 201 receives a downlink signal (for example, downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, based on information on a radio resource in downlink control information, which is inputted from controller 205, a radio resource portion, which may include downlink control information, from the received signal inputted from receiver 201, and outputs the radio resource portion to demodulator 203. Further, extractor 202 extracts, based on information on a radio resource in a data signal, which is inputted from controller 205, a radio resource portion including downlink data, and outputs the radio resource portion to demodulator 203.

Demodulator 203 demodulates, for example, based on information inputted from controller 205, a signal inputted (for example, PDCCH or PDSCH) from extractor 202, and outputs the demodulation result to decoder 204.

Decoder 204 performs error correction decoding of PDCCH or PDSCH, for example, and obtains a higher-layer control signal or downlink control information using the demodulation result inputted from demodulator 203, for example, based on information inputted from controller 205. Decoder 204 outputs the higher-layer control signal and the downlink control information to controller 205. Further, decoder 204 may generate a response signal (for example, ACK/NACK) based on the decoding result of the PDSCH.

Controller 205 determines the radio resource for PUSCH transmission by the method described later based on, for example, the signal inputted from decoder 204 (for example, a higher-layer control signal or downlink control information). Controller 205 outputs the determined information to, for example, encoder 206 and signal assigner 208.

Encoder 206 encodes an uplink data signal (UL data signal) or an uplink control signal based on the information inputted from controller 205, for example. Encoder 206 outputs the encoded bit string to modulator 207.

Modulator 207 modulates, for example, the encoded bit string inputted from encoder 206, and outputs the modulated signal (symbol string) to signal assigner 208.

Signal assigner 208 maps a signal (for example, a sequence) inputted from modulator 207 to a radio resource, for example, based on the information inputted from controller 205. Signal assigner 208 outputs, for example, an uplink signal in which the signal is mapped, to transmitter 209.

Transmitter 209 generates a transmission signal waveform, such as OFDM, for the signal inputted from signal assigner 208. Further, in the case of an OFDM transmission using a CP, for example, transmitter 209 performs IFFT processing on the signal and adds a CP to the signal after the IFFT. Alternatively, in a case where transmitter 209 generates a single carrier waveform, a Discrete Fourier Transformer (DFT) may be added to a rear stage of modulator 207 or to a front stage of signal assigner 208, for example (not illustrated). Further, transmitter 209 performs, for example, RF processing such as D/A conversion and up-conversion on the transmission signal, and transmits the radio signal to base station 100 via an antenna.

### [Operation Examples of Base Station 100 and Terminal 200]

Descriptions will be given of operation examples of base station 100 and terminal 200 that have the above configurations.

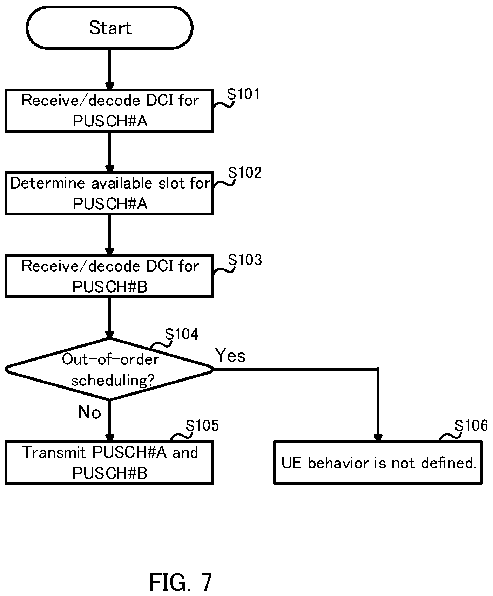

FIG. 7 is a flowchart illustrating an operation example of terminal 200.

In FIG. 7, terminal 200 receives and decodes, for example, DCI for PUSCH#A (DCI that schedules PUSCH#A) (S101).

Terminal 200 determines, for example, a slot that is available for PUSCH#A (S102). The slot that is available for PUSCH#A may be determined based on, for example, preconfiguration by RRC and DCI for PUSCH#A decoded in the processing of S101.

Terminal 200 receives, for example, DCI for PUSCH#B (DCI for scheduling PUSCH#B), and decodes the DCI (S103).

Terminal 200 determines, for example, whether the scheduling for PUSCH#A and PUSCH#B is out-of-order scheduling (S104). An example of a method for determining whether the scheduling is out-of-order scheduling will be described later.

In a case where the scheduling is not determined to be Out-of-order scheduling (S104: No), for example, in a case where the scheduling is In-order scheduling, terminal 200 may transmit each of PUSCH#A and PUSCH#B (S105).

In a case where the scheduling is determined to be Out-of-order scheduling (S104: Yes), the operation of terminal 200 (UE behavior) need not be defined (S106). Terminal 200 need not expect (or assume) the Out-of-order scheduling of the transmission of PUSCH#A and PUSCH#B, for example. For example, terminal 200 may determine the non-transmission of PUSCH#A and PUSCH#B in this case, or may determine the non-transmission of either one of PUSCH#A and PUSCH#B (for example, PUSCH#B).

Further, for example, base station 100 may determine whether the scheduling for PUSCH#A and PUSCH#B is out-of-order scheduling, as in the case of terminal 200. For example, when base station 100 determines that the scheduling is not Out-of-order scheduling (or is In-order scheduling), base station 100 may actually perform the scheduling (for example, normal scheduling). Further, for example, in a case where base station 100 determines that the scheduling is Out-of-order scheduling, base station 100 need not perform the scheduling, or base station 100 may determine non-reception of PUSCH#A and PUSCH#B, or base station 100 may determine non-reception of one of PUSCH#A and PUSCH#B (for example, PUSCH#B).

Note that, in FIG. 7, the transmission of PUSCH#A may be performed before the reception and the decoding of DCI for PUSCH#B (for example, the processing in S103).

Next, an example of a method for determining whether the scheduling is out-of-order scheduling or not will be described.

In the present embodiment, the criterion for determining whether PUSCH transmission is In-order scheduling or Out-of-order scheduling is, for example, "whether the PUSCH transmission#B is scheduled to be transmitted earlier than the end of PUSCH transmission#A (the end of the first PUSCH) in a case where the scheduling DCI of PUSCH transmission#A (for example, HARQ process ID#A or first PUSCH) is received temporally earlier than the scheduling DCI of PUSCH transmission#B (for example, HARQ process ID#B)."

According to this criterion, in a case where, for example, PUSCH transmission#B is scheduled to be transmitted earlier than the end of PUSCH transmission#A (the end of the first PUSCH), the scheduling may be determined to be Out-of-order scheduling. Further, for example, in a case where PUSCH transmission#B is scheduled to be transmitted later than the end of PUSCH transmission#A (the end of the first PUSCH), the scheduling may be determined to be In-order scheduling.

Further, in the present embodiment, in a case where, for example, PUSCH repetition Type A with available slot counting is applied to PUSCH transmission#A, the timing of the end of the PUSCH transmission#A (the end of the first PUSCH) as a criterion for determining whether the scheduling is Out-of-order scheduling may be determined based on an uplink slot that is available for PUSCH transmission#A (for example, repetition transmission of PUSCH#A).

For example, the timing of the end of the PUSCH transmission#A (the end of the first PUSCH) determined based on the uplink slot that is available for PUSCH transmission#A does not depend on an operation in which PUSCH is not transmitted (for example, an operation in which the PUSCH transmission is dropped) by a dynamic indication in any of the uplink slots that are available for PUSCH transmission#A.

Further, in the present embodiment, for example, in a case where PUSCH repetition Type A with available slot counting is applied to PUSCH transmission#B, the timing at which PUSCH transmission#B is scheduled (or the timing at which PUSCH#B is scheduled to be transmitted) as a criterion for determining whether the scheduling is Out-of-order scheduling may be determined based on information (for example, the value of K2) related to the timing from a slot in which terminal 200 receives the DCI scheduling PUSCH transmission#B until terminal 200 receives PUSCH.

For example, when K2 value indicated by DCI scheduling PUSCH transmission#B indicates a timing later than the end of PUSCH transmission#A (the end of the first PUSCH) determined based on the available uplink slot, terminal 200 determines that the scheduling is In-order scheduling.

When the K2 value indicated by DCI scheduling PUSCH transmission#B indicates a timing earlier than the end of PUSCH transmission#A (the end of the first PUSCH) determined based on the available uplink slot, on the other hand, terminal 200 determines that the scheduling is Out-of-order scheduling (or is not In-order scheduling).

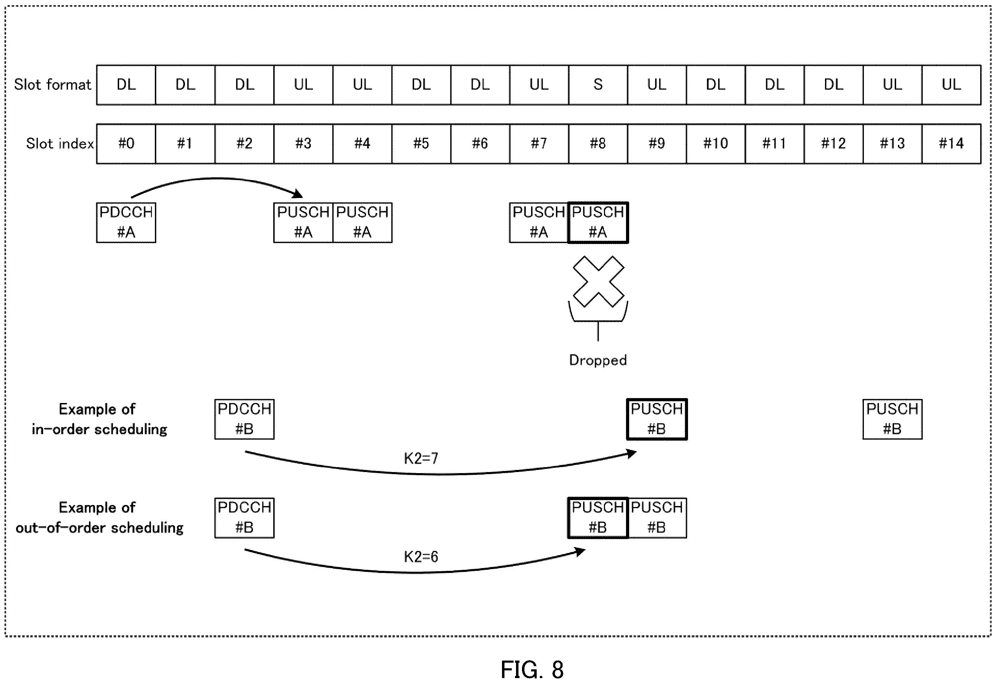

FIG. 8 illustrates an example of Out-of-order scheduling and an example of normal scheduling (In-order scheduling).

In the example illustrated in FIG. 8, PUSCH repetition Type A with available slot counting with four times of Repetitions is applied to PUSCH#A is, and PUSCH repetition Type A with available slot counting with two times of Repetitions is applied to PUSCH#B. Further, in the example illustrated in FIG. 8, the transmission of PUSCH transmission#A is dropped in Slot #8.

For example, the timing of the end of PUSCH transmission#A (the end of the first PUSCH) as a criterion for determining whether the scheduling is Out-of-order scheduling is determined based on an uplink slot available for PUSCH transmission#A, regardless of whether the transmission of PUSCH transmission#A is dropped or not. In the example illustrated in FIG. 8, the uplink slots (UL slots) that are available for PUSCH transmission#A are Slots #3, #4, #7, and #8, and thus, the timing of the end of PUSCH transmission#A (the end of the first PUSCH) is Slot #8. Accordingly, Slot #8 may be configured as a criterion for determining whether the PUSCH transmission#A is Out-of-order scheduling.

For example, as illustrated in FIG. 8, in a case where K2=7 is indicated to terminal 200 by the scheduling DCI for PUSCH#B, the timing at which PUSCH transmission#B is scheduled is Slot #9. Thus, in this case, since PUSCH transmission#B is indicated at a timing later than the end of PUSCH transmission#A (the end of the first PUSCH: Slot #8) by K2=7, terminal 200 determines that the scheduling is In-order scheduling.

Further, for example, in a case where K2=6 is indicated to terminal 200 by the scheduling DCI for PUSCH#B illustrated in FIG. 8, the timing at which PUSCH transmission#B is scheduled is Slot #8. Thus, in this case, since PUSCH#B is indicated at a timing earlier than the end of PUSCH transmission#A (the end of the first PUSCH: for example, the last symbol in Slot #8) (for example, a symbol (for example, the leading symbol) before the last symbol in Slot #8)) by K2=6, terminal 200 determines that the scheduling is Out-of-order scheduling.

Here, the uplink slot that is available for PUSCH transmission in PUSCH repetition Type A with available slot counting can be determined depending on a slot format indication and information on a time resource allocation for PUSCH transmission configured in advance by RRC. Accordingly, terminal 200 is capable of determining, for example, the uplink slot that can be used for PUSCH transmission at the time of receiving (or decoding) DCI for scheduling the PUSCH. Meanwhile, whether PUSCH is actually transmitted in each of the uplink slots that are available for PUSCH transmission is determined for each slot by a dynamic indication.

According to the present embodiment, the timing of the end of PUSCH transmission#A (the end of the first PUSCH) as a criterion for determining whether the scheduling is Out-of-order scheduling, is determined based on the uplink slot that is available for PUSCH transmission#A. Thus, terminal 200 can determine the timing of the end of PUSCH transmission#A (the end of the first PUSCH) at the time when terminal 200 receives (or decodes) the DCI for scheduling PUSCH transmission#A. For this reason, the timing of the end of PUSCH transmission#A (the end of the first PUSCH) as a criterion for determining whether the scheduling is Out-of-order scheduling is not dynamically updated after terminal 200 receives (or decodes) DCI for scheduling PUSCH transmission#A.

Therefore, terminal 200 can determine that the next normal PUSCH transmission to be allocated is scheduled later than the end of PUSCH transmission#A determined based on the uplink slot available for PUSCH transmission#A at the time when terminal 200 receives (or decodes) DCI for scheduling PUSCH transmission#A, for example. For this reason, the present embodiment has an advantage in that a process that terminal 200 determines whether the scheduling is Out-of-order scheduling can be simplified.

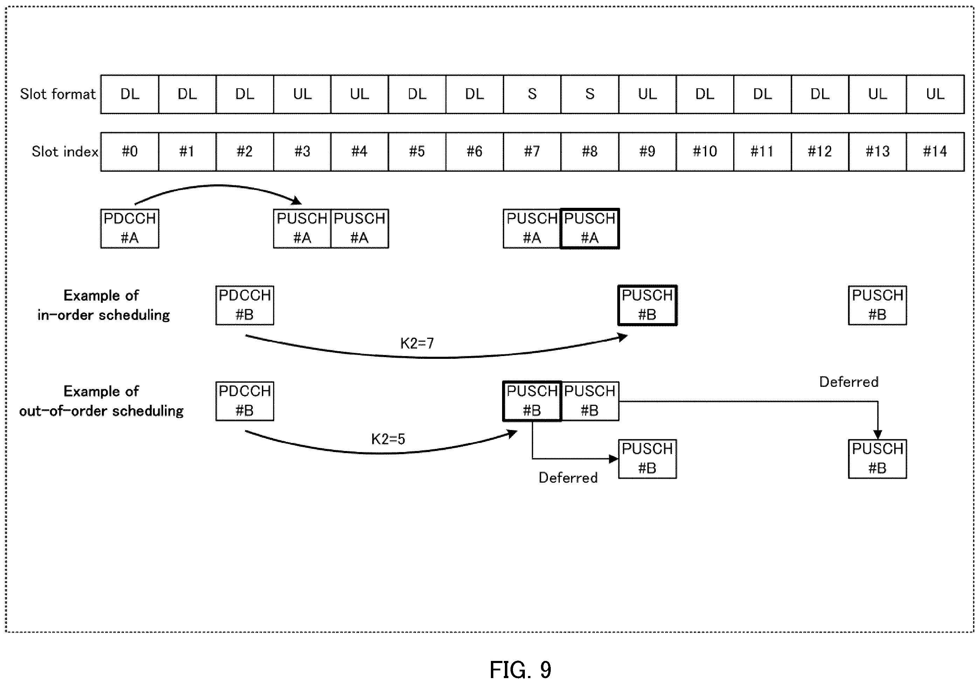

FIG. 9 illustrates an example of Out-of-order scheduling and an example of normal scheduling (In-order scheduling).

In the example illustrated in FIG. 9, PUSCH repetition Type A with available slot counting with four times of Repetitions is applied to PUSCH#A, and PUSCH repetition Type A with available slot counting with two times of Repetitions is applied to PUSCH#B.

Further, in the example illustrated in FIG. 9, Slot #7 and Slot #8 are uplink slots that are available for PUSCH transmission#A, while Slot #7 and Slot #8 are uplink slots that are not available for PUSCH transmission#B. For example, Slot #7 and Slot #8 possibly include N symbols of the uplink symbols, are allocated a number of symbols less than or equal to N symbols for PUSCH transmission#A, and are allocated a number of symbols larger than N symbols for PUSCH transmission#B.

In this case, as illustrated in FIG. 9, for example, when the transmission start position of PUSCH#B is indicated to be Slot #7 by K2 (for example, K2=5), PUSCH transmission#B is possibly deferred to the transmission from Slot #9 based on the uplink slot available for PUSCH transmission. In the example illustrated in FIG. 9, the uplink slot for PUSCH transmission#B may be deferred from Slot #7 and Slot #8 to Slot #9 and Slot #13.

For example, the timing at which PUSCH transmission#B is scheduled, which is a criterion for determining whether the scheduling is Out-of-order scheduling, may be determined based on information (for example, the value of K2) on the timing from the slot in which terminal 200 receives the DCI for scheduling PUSCH transmission#B until terminal 200 transmits PUSCH, regardless of whether the transmission of PUSCH transmission#B is deferred to a later slot.

For example, in a case where K2=7 is indicated to terminal 200 by the scheduling DCI for PUSCH#B, the timing at which PUSCH transmission#B is scheduled is Slot #9, as illustrated in FIG. 9. Thus, in this case, since PUSCH transmission#B is indicated at a timing later than the end of PUSCH transmission#A (the end of the first PUSCH) by K2=7, terminal 200 determines that the scheduling is In-order scheduling.

Further, in a case where K2=5 is indicated to terminal 200 by the scheduling DCI for PUSCH#B, for example, as illustrated in FIG. 9, the timing at which PUSCH transmission#B is scheduled is Slot #7. In this case, although the slots for PUSCH#B are deferred to Slots #9 and #13, since PUSCH transmission#B is indicated at a timing earlier than the end of PUSCH transmission#A (the end of the first PUSCH) by K2=5, terminal 200 determines that scheduling is Out-of-order scheduling.

As described above, in the present embodiment, the timing at which PUSCH transmission#B is scheduled, which is a criterion for determining whether the scheduling is Out-of-order scheduling, is determined based on information (for example, the value of K2) related to the timing from the slot in which terminal 200 receives the DCI for scheduling PUSCH transmission#B until terminal 200 transmits PUSCH, regardless of whether the transmission of PUSCH transmission#B is deferred to a later slot. Thus, to terminal 200, the normal PUSCH transmission to be allocated after PUSCH transmission#A is scheduled later than the end of PUSCH transmission#A determined based on the uplink slot available for PUSCH transmission#A by K2.

In this case, since the plurality of PUSCH allocations do not temporally overlap with each other, terminal 200 does not need to determine whether a certain slot is an uplink slot that is available for the plurality of PUSCH transmissions, and can specify the scheduling of one PUSCH transmission. Thus, there is an advantage in that the processing of terminal 200 can be simplified.

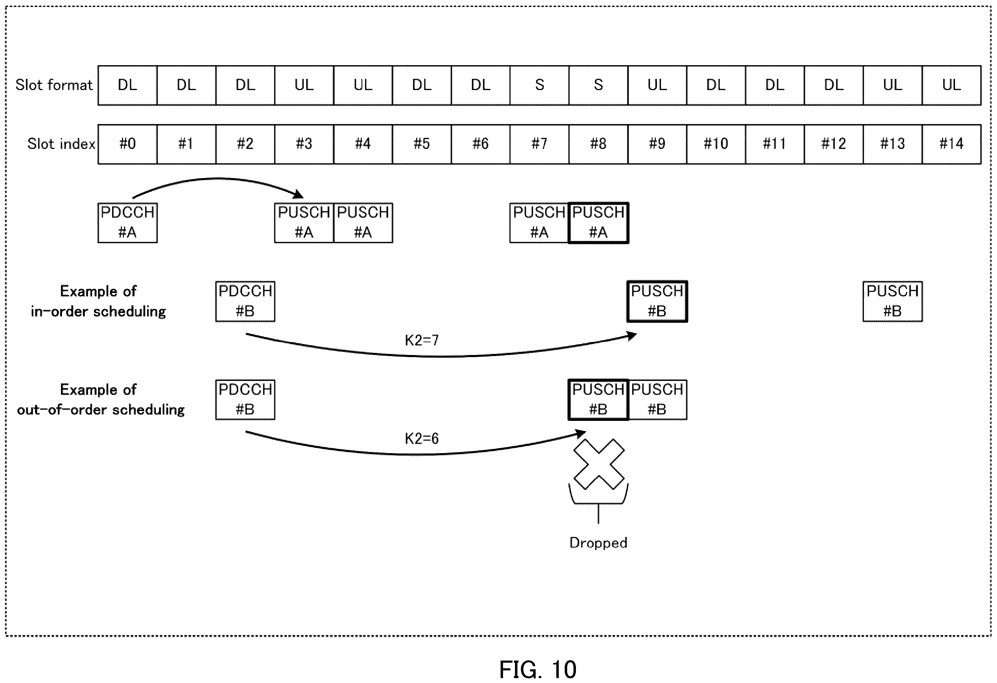

FIG. 10 illustrates examples of Out-of-order scheduling and normal scheduling (In-order scheduling).

In the example illustrated in FIG. 10, PUSCH repetition Type A with available slot counting with four times of Repetitions is applied to PUSCH#A, and PUSCH repetition Type A with available slot counting with two times of Repetitions is applied to PUSCH#B. Further, in the example illustrated in FIG. 10, the transmission of PUSCH transmission#B is dropped in Slot #8.

For example, the timing at which PUSCH transmission#B is scheduled, which is a criterion for determining whether the scheduling is Out-of-order scheduling, may be determined based on information (for example, the value of K2) on the timing from the slot in which terminal 200 receives the DCI for scheduling PUSCH transmission#B until terminal 200 transmits PUSCH, regardless of whether the transmission of PUSCH transmission#B is dropped.

For example, as illustrated in FIG. 10, in a case where K2=7 is indicated to terminal 200 by the scheduling DCI for PUSCH#B, the timing at which PUSCH transmission#B is scheduled is Slot #9. Thus, in this case, since PUSCH transmission#B is indicated at a timing later than the end of PUSCH transmission#A (the end of the first PUSCH) by K2=7, terminal 200 determines that the scheduling is In-order scheduling.

Further, in a case where K2=6 is indicated to terminal 200 by the scheduling DCI for PUSCH#B, the timing at which PUSCH transmission#B is scheduled is, for example, Slot #8 as illustrated in FIG. 10. Further, as illustrated in FIG. 10, when K2=6 is indicated, PUSCH transmission#B in Slot #8 is dropped. In this case, the timing at which PUSCH#B is actually transmitted is Slot #9 (timing later than Slot #8), but PUSCH transmission#B is indicated at a timing earlier than the end of PUSCH transmission#A (the end of the first PUSCH: for example, the last symbol of slot #8) (for example, a symbol (for example, leading symbol) before the last symbol of slot #8)) by K2=6, and thus, terminal 200 determines that the scheduling is Out-of-order scheduling.

Here, the uplink slot that is available for PUSCH transmission in PUSCH repetition Type A with available slot counting can be determined depending on a slot format indication and information on a time resource allocation for PUSCH transmission configured in advance by RRC. Accordingly, terminal 200 is capable of determining, for example, the uplink slot that can be used for PUSCH transmission at the time of receiving (or decoding) DCI for scheduling the PUSCH. Meanwhile, whether PUSCH is actually transmitted in each of the uplink slots that are available for PUSCH transmission is determined for each slot by a dynamic indication.

According to the present embodiment, the timing at which PUSCH transmission#B is scheduled, which is a criterion for determining whether the scheduling is Out-of-order scheduling, can be determined at the time when DCI scheduling PUSCH transmission#B is received (or decoded). For this reason, the timing at which PUSCH transmission#B is scheduled, which is a criterion for determining whether the scheduling is an Out-of-order scheduling, is not dynamically updated after DCI scheduling PUSCH transmission#B is received (or decoded).

Accordingly, terminal 200 can determine whether PUSCH transmission#B is Out-of-order scheduling at the time when terminal 200 receives (or decodes) DCI for scheduling PUSCH transmission#B, for example, and there is an advantage in that the processing in terminal 200 can be simplified.

Exemplary operations of base station 100 and terminal 200 have been described above.

As described above, in the present embodiment, terminal 200 receives DCI (for example, PDCCH#A) scheduling PUSCH#A and receives DCI (for example, PDCCH#B) for scheduling PDSCH#B later than PDCCH#A for PUSCH#A and PUSCH#B at least one of which is repeatedly transmitted. At this time, terminal 200 determines whether the above-described scheduling is defined scheduling (for example, In-order scheduling) based on the timing for PDSCH transmission#A and the timing for PDSCH transmission#B.

For example, in the present embodiment, when the timing at which PUSCH transmission#B is scheduled, which is determined based on information (for example, the value of K2) on the timing from the slot in which DCI scheduling PUSCH#B is received to the slot in which PDSCH#B is transmitted, is earlier than the timing of the end of PUSCH transmission#A, which is determined based on the slot available for repetition transmission of PDSCH#A, terminal 200 determines that the scheduling is Out-of-order scheduling, in other words, not In-order scheduling (for example, the defined scheduling).

Thus, for example, the timing of the end of PUSCH transmission#A (the end of the first PUSCH) and the timing at which PUSCH transmission#B is scheduled for determining whether the scheduling is Out-of-order scheduling are clearly defined in a case where PUSCH repetition Type A with available slot counting is applied to PUSCH transmission. Therefore, according to the present embodiment, terminal 200 can appropriately determine whether the allocation of the PUSCH transmission is Out-of-order scheduling even in a case where PUSCH repetition Type A with available slot counting is applied to either of or both of the transmissions of PUSCH#A and PUSCH#B.

Thus, according to the present embodiment, terminal 200 can appropriately transmit a signal in the uplink.

### (Embodiment 2)

Configurations of base station 100 and terminal 200 according to the present embodiment may be the same as the configurations in Embodiment 1.

In the present embodiment, the criterion for determining whether PUSCH transmission is In-order scheduling or Out-of-order scheduling is, for example, the same as in Embodiment 1, and is as follows: "whether the PUSCH transmission#B is scheduled to be transmitted earlier than the end of PUSCH transmission#A (the end of the first PUSCH) in a case where the scheduling DCI of PUSCH transmission#A (for example, HARQ process ID#A or first PUSCH) is received temporally earlier than the scheduling DCI of PUSCH transmission#B (for example, HARQ process ID#B)."

Following this criterion, when PUSCH transmission#B is scheduled to be transmitted earlier than the end of PUSCH transmission#A (the end of the first PUSCH), the scheduling may be determined to be Out-of-order scheduling. Further, for example, when PUSCH transmission#B is scheduled to be transmitted later than the end of PUSCH transmission#A (the end of the first PUSCH), the scheduling may be determined to be In-order scheduling.

Further, in the present embodiment, in a case where PUSCH repetition Type A with available slot counting is applied to PUSCH transmission#A, the timing of the end of PUSCH transmission#A (the end of the first PUSCH), which serves as a criterion for determining whether the scheduling is Out-of-order scheduling, may be determined based on an uplink slot actually used for PUSCH transmission#A (for example, repetition transmission of PUSCH#A) (for example, the slot in which PUSCH#A is actually transmitted), for example.

For example, the timing of the end of PUSCH transmission#A (the end of the first PUSCH), which is determined based on the slot in which PUSCH#A is actually transmitted, may depend on an operation in which PUSCH transmission is not performed (for example, an operation in which PUSCH transmission is dropped) by dynamic indication in any uplink slot available for PUSCH transmission#A.

Further, in the present embodiment, for example, in a case where PUSCH repetition Type A with available slot counting is applied to PUSCH transmission#B, the timing at which PUSCH transmission#B is scheduled (or the timing at which PUSCH#B is scheduled to be transmitted) as a criterion for determining whether the scheduling is Out-of-order scheduling may be determined based on information (for example, the value of K2) on the timing from the slot in which terminal 200 receives the DCI for scheduling PUSCH transmission#B until terminal 200 transmits PUSCH, as in Embodiment 1

For example, when the value of K2 indicated by DCI scheduling PUSCH transmission#B indicates a timing later than the end of PUSCH transmission#A (the end of the first PUSCH) actually transmitted, terminal 200 determines that the scheduling is In-order scheduling.

Meanwhile, when the value of K2 indicated by DCI scheduling PUSCH transmission#B indicates a timing earlier than the end of the PUSCH transmission#A (the end of the first PUSCH) actually transmitted, terminal 200 determines that the scheduling is Out-of-order scheduling (or is not In-order scheduling).

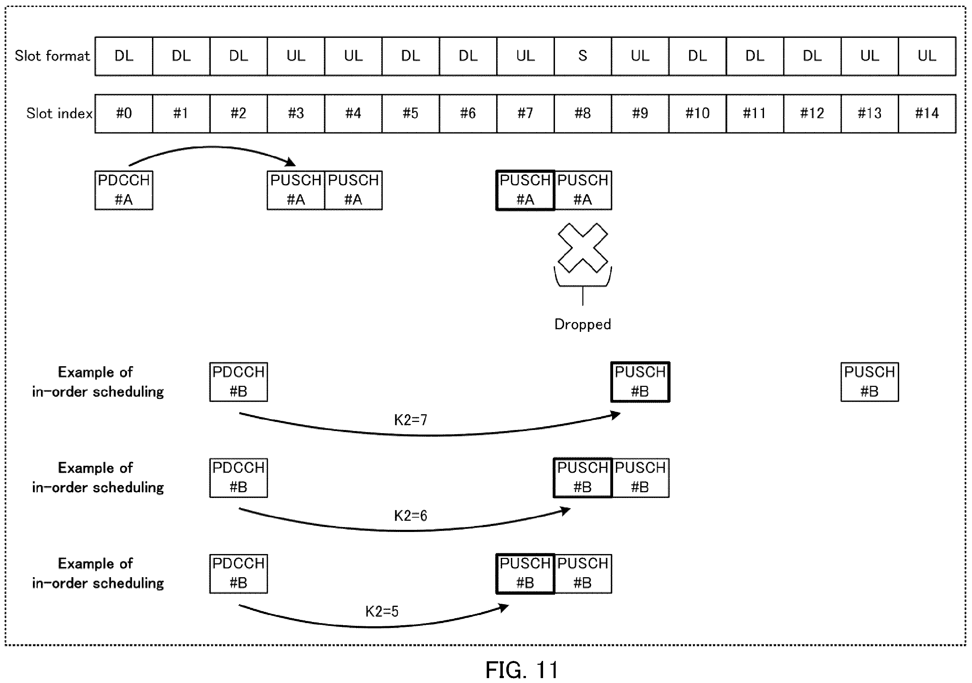

FIG. 11 illustrates an example of Out-of-order scheduling and normal scheduling (In-order scheduling).

In the example illustrated in FIG. 11, PUSCH repetition Type A with available slot counting with four times of Repetitions is applied to PUSCH#A, and PUSCH repetition Type A with available slot counting with two times of Repetitions is applied to PUSCH#B. Further, in the example illustrated in FIG. 11, the transmission of PUSCH transmission#A is dropped in Slot #8.

For example, the timing of the end of PUSCH transmission#A (the end of the first PUSCH) that serves as a criterion for determining whether the scheduling is Out-of-order scheduling is determined based on the actually transmitted PUSCH transmission#A depending on whether the transmission of PUSCH transmission#A is dropped. In the example illustrated in FIG. 11, the uplink slots (UL slots) that are available for PUSCH transmission#A are Slots #3, #4, #7, and #8, and PUSCH transmission#A is dropped in Slot #8. Thus, the timing of the end of PUSCH transmission#A (the end of the first PUSCH) is the last Slot #7 among Slots #3, #4, and #7 which are actually used for transmission. Accordingly, Slot #7 may be set as a criterion for determining whether PUSCH transmission#A is Out-of-order scheduling.

For example, in a case where K2=7 is indicated to terminal 200 by the scheduling DCI for PUSCH#B, the timing at which PUSCH transmission#B is scheduled is Slot #9, as illustrated in FIG. 11. Thus, in this case, since PUSCH transmission#B is indicated at a timing later than the end of PUSCH transmission#A (the end of the first PUSCH: Slot #7) by K2=7, terminal 200 determines that the scheduling is In-order scheduling.

Further, for example, in a case where K2=6 is indicated to terminal 200 by the scheduling DCI for PUSCH#B as illustrated in FIG. 11, the timing at which PUSCH transmission#B is scheduled is Slot #8. Thus, in this case, since PUSCH transmission#B is indicated at a timing later than the end of PUSCH transmission#A (the end of the first PUSCH: Slot #7) by K2=6, terminal 200 determines that the scheduling is In-order scheduling.

Further, for example, in a case where K2=5 is indicated to terminal 200 by the scheduling DCI for PUSCH#B as illustrated in FIG. 11, the timing at which PUSCH transmission#B is scheduled is Slot #7. Thus, in this case, since PUSCH transmission#B is indicated at a timing earlier than the end of PUSCH transmission#A (the end of the first PUSCH: the last symbol in Slot #7) (for example, a symbol (for example, the first symbol) before the last symbol in Slot #7)) by K2=5, terminal 200 determines that the scheduling is Out-of-order scheduling.

In the present embodiment, when the timing at which PUSCH transmission#B is scheduled, which is determined based on the information (for example, the value of K2) on the timing from the slot in which DCI for PUSCH#B is received to the slot in which PDSCH#B is transmitted, is earlier than the timing of end of PUSCH transmission#A, which is determined based on the slot actually used for repetition transmission of PDSCH#A, terminal 200 determines that the scheduling is Out-of-order scheduling, in other words, not In-order scheduling (for example, the defined scheduling).

As described above, in the same manner as in Embodiment 1, for example, the timing of the end of PUSCH transmission#A (the end of the first PUSCH) and the timing at which PUSCH transmission#B is scheduled for determining whether the scheduling is Out-of-order scheduling are clearly defined in a case where PUSCH repetition Type A with available slot counting is applied to PUSCH transmission. Thus, terminal 200 can appropriately determine whether the allocation of the PUSCH transmission is Out-of-order scheduling.

Further, according to the present embodiment, the slot in which PUSCH transmission#A is dropped becomes available for PUSCH transmission#B, for example, in a case of K2=6 illustrated in FIG. 11, and thus, it is possible to improve the utilization efficiency of uplink resource.

### (Embodiment 3)

The configurations of base station 100 and terminal 200 according to the present embodiment may be the same as those in Embodiment 1.

In the present embodiment, the criterion for determining whether PUSCH transmission is In-order scheduling or Out-of-order scheduling is, for example, the same as in Embodiment 1, and is as follows: "whether the PUSCH transmission#B is scheduled to be transmitted earlier than the end of PUSCH transmission#A (the end of the first PUSCH) in a case where the scheduling DCI of PUSCH transmission#A (for example, HARQ process ID#A or first PUSCH) is received temporally earlier than the scheduling DCI of PUSCH transmission#B (for example, HARQ process ID#B)."

Following this criterion, when PUSCH transmission#B is scheduled to be transmitted earlier than the end of PUSCH transmission#A (the end of the first PUSCH), the scheduling may be determined to be Out-of-order scheduling. Further, for example, when PUSCH transmission#B is scheduled to be transmitted later than the end of PUSCH transmission#A (the end of the first PUSCH), the scheduling may be determined to be In-order scheduling.

Further, in the present embodiment, for example, in a case where PUSCH repetition Type A with available slot counting is applied to PUSCH transmission#A, the timing of the end of the PUSCH transmission#A (the end of the first PUSCH) as a criterion for determining whether the scheduling is Out-of-order scheduling may be determined based on the uplink slot available for PUSCH transmission#A (for example, repetition transmission of PUSCH#A), in the same manner as in Embodiment 1.

For example, the timing of the end of the PUSCH transmission#A (the end of the first PUSCH) that is determined based on the uplink slot that is available for PUSCH transmission#A does not depend on an operation in which PUSCH is not transmitted (for example, an operation in which the PUSCH transmission is dropped) by a dynamic indication in any of the uplink slots that are available for PUSCH transmission#A.

Further, in the present embodiment, in a case where PUSCH repetition Type A with available slot counting is applied to PUSCH transmission#B, the timing at which PUSCH transmission#B is scheduled, which is a criterion for determining whether the scheduling is Out-of-order scheduling, may be determined based on an uplink slot available for PUSCH transmission#B (for example, repetition transmission of PUSCH#B), for example.

For example, when the uplink slot that is available for PUSCH transmission#B indicates a timing later than the end of PUSCH transmission#A (the end of the first PUSCH) determined based on the available uplink slot, terminal 200 determines that the scheduling is In-order scheduling.

On the other hand, when the uplink slot that is available for PUSCH transmission#B indicates a timing earlier than the end of PUSCH transmission#A (the end of the first PUSCH) determined based on the available uplink slot, terminal 200 determines that the scheduling is Out-of-order scheduling (or is not In-order scheduling).

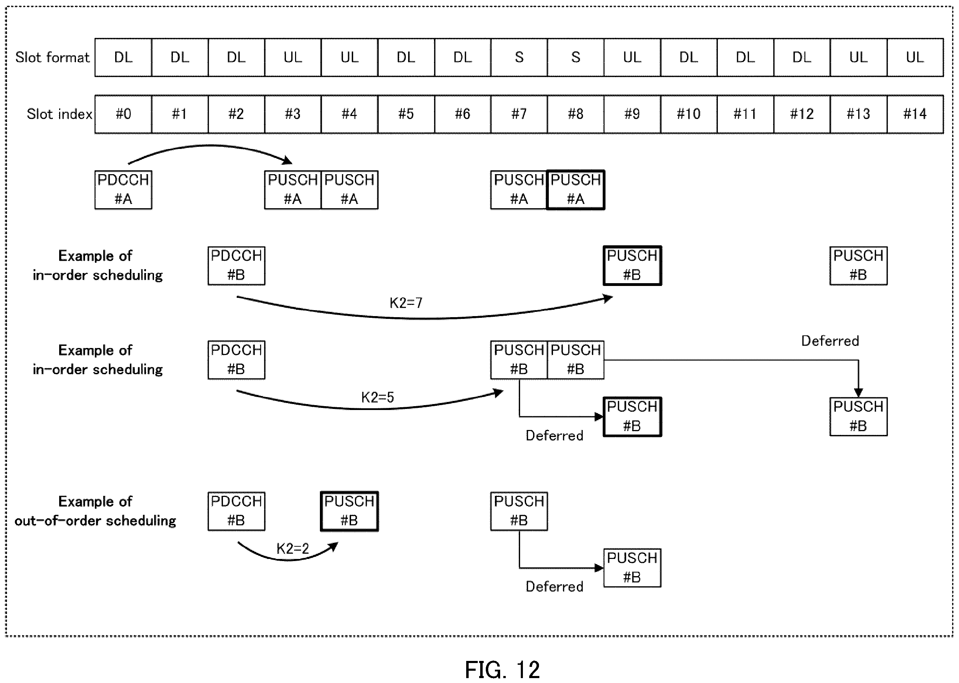

FIG. 12 illustrates an example of Out-of- order scheduling and a normal scheduling (In-order scheduling).

In the example illustrated in FIG. 12, PUSCH repetition Type A with available slot counting with four times of Repetitions is applied to PUSCH#A, and PUSCH repetition Type A with available slot counting with two times of Repetitions is applied to PUSCH#B.

Further, in the example illustrated in FIG. 12, Slot #7 and Slot #8 are uplink slots that are available for PUSCH transmission#A, while Slot #7 and Slot #8 are uplink slots that are not available for PUSCH transmission#B. For example, Slot #7 and Slot #8 possibly include N symbols of the uplink symbols, are allocated a number of symbols less than or equal to N symbols for PUSCH transmission#A, and are allocated a number of symbols larger than N symbols for PUSCH transmission#B.

In the example illustrated in FIG. 12, for example, the timing of the end of PUSCH transmission#A (the end of the first PUSCH) is determined based on the uplink slot available for PUSCH transmission#A. In the example illustrated in FIG. 12, the uplink slots (UL slots) that can be used for PUSCH transmission#A are Slots #3, #4, #7, and #8, and thus, the timing of the end of PUSCH transmission#A (the end of the first PUSCH) is Slot #8. Accordingly, Slot #8 may be set as a criterion for determining whether the PUSCH transmission#A is Out-of-order scheduling.

For example, in a case where K2=7 is indicated to terminal 200 by the scheduling DCI for PUSCH#B, the uplink slots available for PUSCH transmission#B are Slots #9 and #13, as illustrated in FIG. 12. Accordingly, Slot #9 may be set as a criterion for determining whether PUSCH transmission#B is an Out-of-order scheduling or not. In this case, the uplink slot that is available for PUSCH transmission#B is a timing later than the end of PUSCH transmission#A (the end of the first PUSCH: Slot #8), and thus, terminal 200 determines that the scheduling is In-order scheduling.

Further, for example, in a case where K2=5 is indicated to terminal 200 by the scheduling DCI for PUSCH#B as illustrated in FIG. 12, the uplink slots that are available for PUSCH transmission#B may be configured as Slots #9 and #13 (or may be deferred). Accordingly, Slot #9 may be set as a criterion for determining whether PUSCH transmission#B is Out-of-order scheduling. In this case, the uplink slot that is available for PUSCH transmission#B is a timing later than the end of PUSCH transmission#A (the end of the first PUSCH: Slot #8), and thus, terminal 200 determines that the scheduling is In-order scheduling.

Further, for example, in a case where K2=2 is indicated to terminal 200 by the scheduling DCI for PUSCH#B as illustrated in FIG. 12, the uplink slots that are available for PUSCH transmission#B may be configured as Slots #4 and #9 (or may be partially deferred). Accordingly, Slot #4 may be configured as a criterion for determining whether PUSCH transmission#B is Out-of-order scheduling or not. In this case, the uplink slot that is available for PUSCH transmission#B is at a timing earlier than the end of the PUSCH transmission#A (the end of the first PUSCH: Slot #8), and thus, terminal 200 determines that the scheduling is Out-of-order scheduling.

In the present embodiment, when the timing at which PUSCH transmission#B is scheduled, which is determined based on a slot that is available for PDSCH transmission#B, is earlier than the timing of end of PUSCH transmission#A, which is determined based on a slot that is available for PDSCH transmission#A, terminal 200 determines that the scheduling is not In-order scheduling (for example, a defined scheduling), in other words, the scheduling is Out-of-order scheduling.

As described above, in the same manner as in Embodiment 1, for example, when PUSCH repetition Type A with available slot counting is applied to PUSCH transmission, the timing of the end of PUSCH transmission#A (the end of the first PUSCH) and the timing at which PUSCH transmission#B is scheduled for determining whether the scheduling is Out-of-order scheduling are clearly defined. Thus, terminal 200 can appropriately determine whether the allocation of the PUSCH transmission is Out-of-order scheduling.

Further, according to the present embodiment, the uplink slot that is available for PUSCH transmission#B is configured as a criterion for determining whether the scheduling is Out-of-order scheduling, and thus, the allocation of PUSCH transmission#B is possible such that the scheduling is not Out-of-order scheduling even in a case where the value that may be indicated by the value of K2 is within a narrow range. For example, in the example illustrated in FIG. 12, when a criterion for determining whether the scheduling is Out-of-order scheduling is configured by the value of K2 as in Embodiment 1, while K2=7 or more is set in order to allocate PUSCH transmission#B such that the scheduling is not Out-of-order scheduling, in the present embodiment, allocation of PUSCH transmission#B such that the scheduling is not Out-of-order scheduling is possible even in the case of K2=5.

### (Embodiment 4)

The configurations of base station 100 and terminal 200 according to the present embodiment may be the same as those in Embodiment 1.

In the present embodiment, the criterion for determining whether PUSCH transmission is In-order scheduling or Out-of-order scheduling is, for example, the same as in Embodiment 1, and is as follows: "whether the PUSCH transmission#B is scheduled to be transmitted earlier than the end of PUSCH transmission#A (the end of the first PUSCH) in a case where the scheduling DCI of PUSCH transmission#A (for example, HARQ process ID#A or first PUSCH) is received temporally earlier than the scheduling DCI of PUSCH transmission#B (for example, HARQ process ID#B)."

Following this criterion, when PUSCH transmission#B is scheduled to be transmitted earlier than the end of PUSCH transmission#A (the end of the first PUSCH), the scheduling may be determined to be Out-of-order scheduling. Further, for example, when PUSCH transmission#B is scheduled to be transmitted later than the end of PUSCH transmission#A (the end of the first PUSCH), the scheduling may be determined to be In-order scheduling.

Further, in the present embodiment, for example, in a case where PUSCH repetition Type A with available slot counting is applied to PUSCH transmission#A, the timing of the end (the end of the first PUSCH) of the PUSCH transmission#A as a criterion for determining whether the scheduling is Out-of-order scheduling may be determined based on the uplink slot available for PUSCH transmission#A (for example, repetition transmission of PUSCH#A), in the same manner as in Embodiment 1.

For example, the timing of the end of the PUSCH transmission#A (the end of the first PUSCH) that is determined based on the uplink slot that is available for PUSCH transmission#A does not depend on an operation in which PUSCH is not transmitted (for example, an operation in which the PUSCH transmission is dropped) by a dynamic indication in any of the uplink slots that are available for PUSCH transmission#A.

Further, in the present embodiment, for example, in a case where PUSCH repetition Type A with available slot counting is applied to PUSCH transmission#B, the timing at which PUSCH transmission#B is scheduled, which is a criterion for determining whether the scheduling is Out-of-order scheduling, may be determined based on an uplink slot actually used for PUSCH transmission#B (for example, repetition transmission of PUSCH#B) (or the slot in which PUSCH#B is actually transmitted),.

For example, when the uplink slot actually used for PUSCH transmission#B indicates a timing later than the end of PUSCH transmission#A (the end of the first PUSCH) determined based on the available uplink slots, terminal 200 determines that the scheduling is In-order scheduling.

Meanwhile, when the uplink slot actually used for PUSCH transmission#B indicates a timing earlier than the end of PUSCH transmission#A (the end of the first PUSCH) determined based on the available uplink slot, terminal 200 determines that the scheduling is Out-of-order scheduling (or is not In-order scheduling).

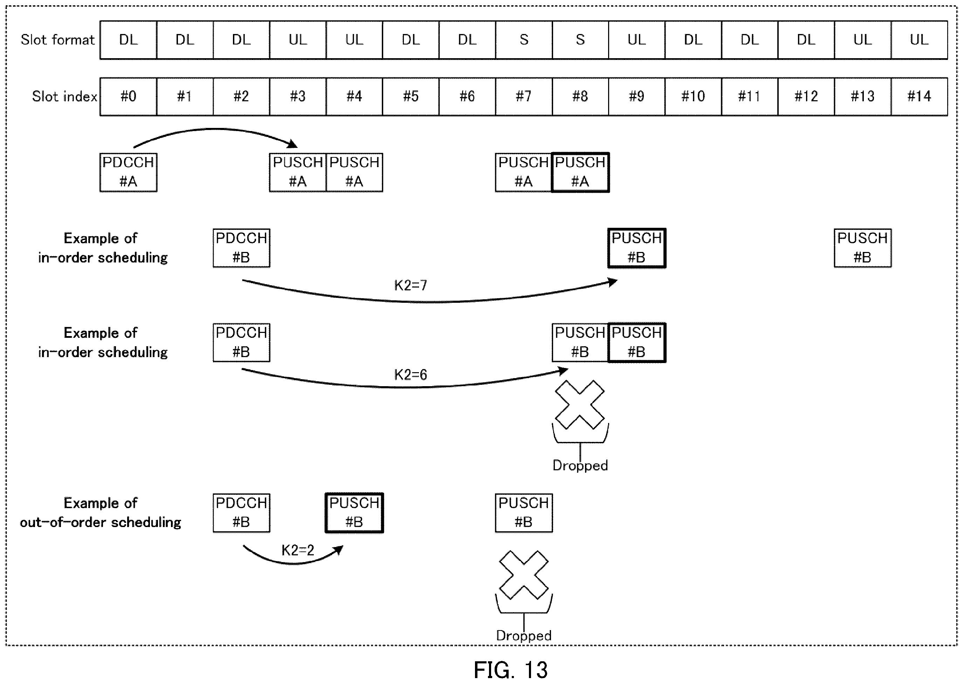

FIG. 13 illustrates an example of Out-of-order scheduling and normal scheduling (In-order scheduling).

In the example illustrated in FIG. 13, PUSCH repetition Type A with available slot counting with four times of Repetitions is applied to PUSCH#A, and PUSCH repetition Type A with available slot counting with two times of Repetitions is applied to PUSCH#B. Further, in the example illustrated in FIG. 13, the transmission of PUSCH transmission#B is dropped in Slot #7 or Slot #8.

For example, the timing of the end of PUSCH transmission#A (the end of the first PUSCH) that serves as a criterion for determining whether the scheduling is Out-of-order scheduling is determined based on an uplink slot available for PUSCH transmission#A, regardless of whether the transmission of the PUSCH transmission#A is dropped. In the example illustrated in FIG. 13, the uplink slots (UL slots) that can be used for PUSCH transmission#A are Slots #3, #4, #7, and #8, and thus, the timing of the end of the PUSCH transmission#A (the end of the first PUSCH) is Slot #8. Accordingly, Slot #8 may be set as a criterion for determining whether the scheduling is Out-of-order scheduling for PUSCH transmission#A.

For example, in a case where K2=7 is indicated to terminal 200 by the scheduling DCI for PUSCH#B, the uplink slots actually used for PUSCH transmission#B are Slots #9 and #13, as illustrated in FIG. 13. Accordingly, Slot #9 may be set as a criterion for determining whether the scheduling is Out-of-order scheduling for PUSCH transmission#B. In this case, Slot #9, which is actually used for PUSCH transmission#B, is a timing later than the end of PUSCH transmission#A (the end of the first PUSCH: Slot #8), and thus, terminal 200 determines that the scheduling is In-order scheduling.

Further, for example, in a case where K2=6 is indicated to terminal 200 by the scheduling DCI for PUSCH#B as illustrated in FIG. 13 and the PUSCH transmission#B in Slot #8 is dropped, the uplink slot that is actually used for PUSCH transmission#B is Slot #9. Accordingly, Slot #9 may be set as a criterion for determining whether the scheduling is Out-of-order scheduling for PUSCH transmission#B. In this case, Slot #9, which is actually used for PUSCH transmission#B, is a timing later than the end of PUSCH transmission#A (the end of the first PUSCH: Slot #8), and thus, terminal 200 determines that the scheduling is In-order scheduling.

Further, for example, in a case where K2=2 is indicated to terminal 200 by the scheduling DCI for PUSCH#B as illustrated in FIG. 13, and the PUSCH transmission#B in Slot #7 is dropped, the uplink slot actually used for PUSCH transmission#B is Slot #4. Accordingly, Slot #4 may be configured as a criterion for determining whether the scheduling is Out-of-order scheduling for PUSCH transmission#B. In this case, Slot #4, which is actually used for PUSCH transmission#B, is a timing earlier than the end of PUSCH transmission#A (the end of the first PUSCH: Slot #8), and thus, terminal 200 determines that the scheduling is Out-of-order scheduling.

In the present embodiment, when the timing at which PUSCH transmission#B is scheduled, which is determined based on a slot actually used for PDSCH transmission#B, is earlier than the timing of the end of PUSCH transmission#A determined based on a slot that is available for PDSCH transmission#A, terminal 200 determines that the scheduling is not In-order scheduling (for example, a defined scheduling), that is, the scheduling is Out-of-order scheduling.

As described above, in the same manner as in Embodiment 1, for example, when PUSCH repetition Type A with available slot counting is applied to PUSCH transmission, the timing of the end of PUSCH transmission#A (the end of the first PUSCH) and the timing at which PUSCH transmission#B is scheduled for determining whether the scheduling is Out-of-order scheduling are clearly defined. Thus, terminal 200 can appropriately determine whether the allocation of the PUSCH transmission is Out-of-order scheduling.

Further, according to the present embodiment, the uplink slot actually used for PUSCH transmission#B is configured as a criterion for determining whether the scheduling is Out-of-order scheduling or not, and thus, the allocation of PUSCH transmission#B is made possible such that the scheduling is not Out-of-order scheduling even in a case where the range of values that can be indicated by the value of K2 is narrow. For example, in the example illustrated in FIG. 13, when a criterion for determining whether the scheduling is Out-of-order scheduling is configured by the value of K2 as in Embodiment 1, while K2=7 or more is set in order to allocate PUSCH transmission#B such that the scheduling is not Out-of-order scheduling, in the present embodiment, allocation of PUSCH transmission#B such that the scheduling is not Out-of-order scheduling is possible even in the case of K2=6.

The embodiments according to a non-limiting example of the present disclosure have been each described, thus far.

(Other Embodiments)
(1) In NR Rel. 15/16, it is not assumed that PUSCH transmission#A (for example, corresponding to HARQ process ID#A) and PUSCH transmission#B (for example, corresponding to HARQ process ID#B) are scheduled such that PUSCH transmission#A and PUSCH transmission#B temporally overlap with each other for any two arbitrary HARQ process ID#A and HARQ process ID#B.

Hereinafter, the case where PUSCH transmission#A and PUSCH transmission#B are scheduled to temporally overlap with each other for any two HARQ process ID#A and HARQ process ID#B will be referred to as "PUSCH overlapping."

In the standard of NR Rel. 15/16, not assuming PUSCH overlapping is stated as follows (see, for example, NPL 6).

"For any HARQ process ID(s) in a given scheduled cell, the UE is not expected to transmit a PUSCH that overlaps in time with another PUSCH."

Since terminal 200 does not assume PUSCH overlapping, the terminal operation in a case of PUSCH overlapping is not defined in the standard. For this reason, base station 100 is expected to schedule PUSCH such that PUSCH overlapping does not occur, for example.

For example, each of the above-described embodiments may be applied to the determination of PUSCH overlapping in addition to or instead of a determination of Out-of-order scheduling.

For example, when the operation of Embodiment 1 is applied to PUSCH overlapping, terminal 200 determines whether PUSCH overlapping occurs, based on whether the transmission of PUSCH#A determined based on the uplink slot available for PUSCH transmission#A and the transmission of another PUSCH different from PUSCH#A temporally overlap with each other. At this time, the timing of PUSCH transmission#A determined based on the uplink slot available for PUSCH transmission#A need not depend on an operation in which PUSCH is not transmitted (for example, an operation in which PUSCH transmission is dropped) by the dynamic indication.

Further, for example, when the operation of Embodiment 2 is applied to PUSCH overlapping, terminal 200 may determine whether the PUSCH overlapping occurs, based on whether the actual transmission of PUSCH transmission#A (for example, the slot actually used) and the transmission of another PUSCH different from PUSCH#A temporally overlap with each other.

Further, the timing at which transmission of another PUSCH different from PUSCH#A is scheduled may be determined based on information (for example, a value of K2) related to the timing from the slot in which the DCI for scheduling the PUSCH transmission is received until PUSCH is transmitted, an uplink slot that is available for the PUSCH transmission, or an uplink slot that is actually used for the PUSCH transmission.

(2) In the above-described embodiments, a case where Repetition in slot units is used has been described, but the unit of Repetition is not limited to the slot unit, and may be, for example, a mini-slot (sub-slot) unit obtained by dividing a slot into a plurality of units, a multi-slot unit constituted by a plurality of slots, or a symbol unit.

(3) In the embodiments described above, Out-of-order handling of two PUSCHs has been described, but the number of PUSCHs, which is a determination target for Out-of-order scheduling, is not limited to two. The embodiment described above may also be applied to a case where the number of PUSCHs are three or more. In a case where the number of PUSCHs is three or more, the above-described embodiment may be applied to continuous two PUSCHs in an order in which terminal 200 receives DCI scheduling PUSCH.

(4) In the embodiments described above, the cases have been described in which the timing of the end of PUSCH transmission#A (the end of the first PUSCH) that serves as a criterion for determining whether the scheduling is Out-of-order scheduling when PUSCH repetition Type A with available slot counting is applied to PUSCH transmission#A is either an uplink slot that is available for PUSCH transmission#A (for example, Embodiment 1, Embodiment 3, or Embodiment 4) or an uplink slot that is actually used for PUSCH transmission#A (for example, Embodiment 2).

Further, the cases has been described in which the timing at which PUSCH transmission#B is scheduled, which serves as a criterion for determining whether the scheduling is Out-of-order scheduling, when PUSCH repetition Type A with available slot counting is applied to PUSCH transmission#B is any one of a timing based on the value of K2 (for example, Embodiment 1 or Embodiment 2), an uplink slot that is available for PUSCH transmission#B (for example, Embodiment 3), or an uplink slot that is actually used for PUSCH transmission#B (for example, Embodiment 4).

The timing at which the end of the PUSCH transmission#A (the end of the first PUSCH) and the timing at which PUSCH transmission#B is scheduled, which serves as criteria for determining whether the scheduling is Out-of-order scheduling, may be set to any of the above-described timings.

For example, in Embodiment 2, instead of the timing based on the value of K2, an uplink slot that is available for PUSCH transmission#B (for example, Embodiment 3), or an uplink slot that is actually used for PUSCH transmission#B (for example, Embodiment 4) may be applied to the timing at which PUSCH transmission#B is scheduled, which serves as a criterion for determining whether the scheduling is Out-of-order scheduling.

For example, when the timing at which PUSCH transmission#B is scheduled, which is determined based on a slot that is available for PUSCH transmission#B, is earlier than the timing of end of PUSCH transmission#A, which is determined based on a slot that is actually used for PUSCH transmission#A, terminal 200 may determine that the scheduling is Out-of-order scheduling (or is not In-order scheduling).

Further, when, for example, the timing at which PUSCH transmission#B is scheduled, which is determined based on the slot actually used for PUSCH transmission#B, is earlier than the timing of end of PUSCH transmission#A determined based on the slot actually used for PUSCH transmission#A, terminal 200 may determine that the scheduling is Out-of-order scheduling (or not In-order scheduling).

(5) In each of the embodiments described above, PUSCH transmission is described as an uplink transmission, but the channel used for the uplink transmission is not limited to PUSCH, and may be another channel. Further, the type of information to be transmitted is not limited to data, and may be information of another type (for example, an uplink control signal). Further, an exemplary embodiment of the present disclosure is not limited to the uplink transmission, but may be applied to downlink transmission or sidelink transmission.

Further, the parameters such as the number of slots, the number of symbols, symbol positions, the value of K2, the number of repetitions, and the like, which have been illustrated in the present disclosure, are merely examples, and may have other values.

Further, in the present disclosure, Repetition may also be referred to as, for example, slot aggregation, slot bundling, TTI aggregation, or TTI bundling.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

### (Complement)

Information indicating whether terminal 200 supports the functions, operations, or pieces of processing that have been indicated in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

### (Uplink/Downlink/Sidelink)

The present disclosure may be applied to any of uplink, downlink and sidelink.
The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

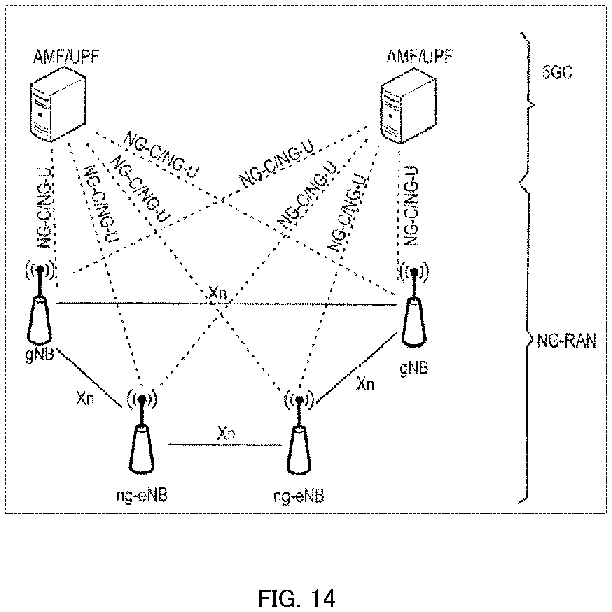

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

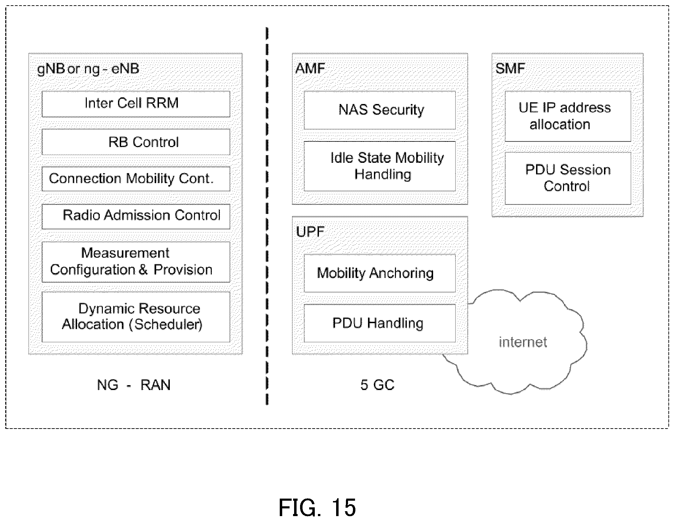

FIG. 15 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

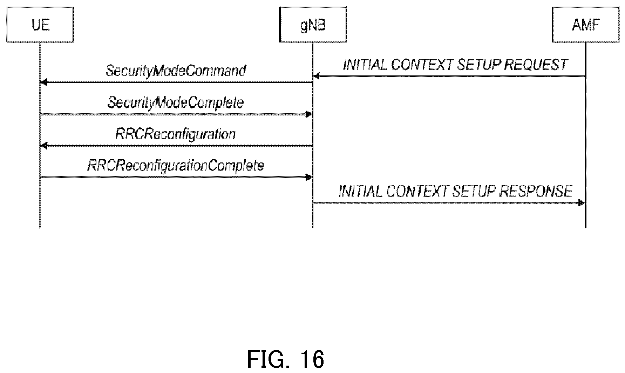

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

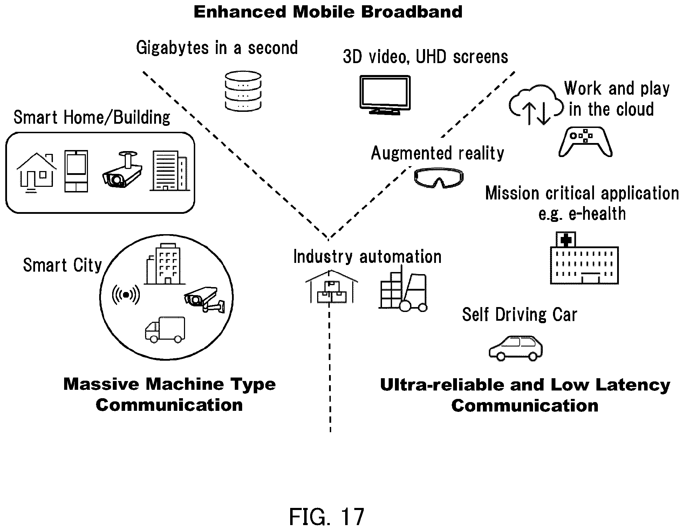

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 16. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

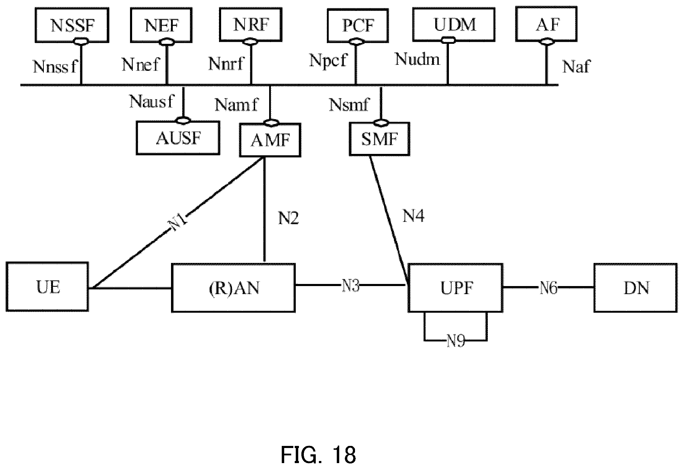

FIG. 18 illustrates a 5G NR non-roaming reference architecture (see TS 23.501 v16.1.0, section 4.23). An Application Function (AF) (e.g., an external application server hosting 5G services, exemplarily described in FIG. 17) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an embodiment of the present disclosure includes: reception circuitry, which, in operation, receives first control information scheduling a first data signal and receives second control information scheduling a second data signal later than the first control information for the first data signal and the second data signal, at least one of the first data signal and the second data signal being transmitted repeatedly; and control circuitry, which, in operation, determines whether the scheduling is defined scheduling, based on a first timing for a transmission of the first data signal and a second timing for a transmission of the second data signal.

In an embodiment of the present disclosure, the first timing is determined based on an uplink slot available for repetition transmission of the first data signal.

In an embodiment of the present disclosure, the first timing does not depend on an operation in which a transmission of the first data signal is not performed in any of uplink slots available for repetition transmission of the first data signal.

In an embodiment of the present disclosure, the first timing is determined based on an uplink slot actually used for repetition transmission of the first data signal.

In an embodiment of the present disclosure, the second timing is determined based on information on a timing from a slot in which the second control information is received to a slot in which the second data signal is transmitted.

In an embodiment of the present disclosure, the second timing is determined based on an uplink slot that is available for repetition transmission of the second data signal.

In an embodiment of the present disclosure, the second timing is determined based on an uplink slot actually used for repetition transmission of the second data signal.

In an embodiment of the present disclosure, the control circuitry determines that the scheduling is not the defined scheduling when the second timing determined based on information on a timing from a slot in which the second control information is received to a slot in which the second data signal is transmitted is earlier than the first timing determined based on a slot available for repetition transmission of the first data signal.

In an embodiment of the present disclosure, the control circuitry determines that the scheduling is not the defined scheduling when the second timing determined based on information on a timing from a slot in which the second control information is received to a slot in which the second data signal is transmitted is earlier than the first timing determined based on a slot actually used for repetition transmission of the first data signal.

In an embodiment of the present disclosure, the control circuitry determines that the scheduling is not the defined scheduling when the second timing determined based on a slot available for repetition transmission of the second data signal is earlier than the first timing determined based on a slot available for repetition transmission of the first data signal.

In an embodiment of the present disclosure, the control circuitry determines that the scheduling is not the defined scheduling when the second timing determined based on a slot actually used for repetition transmission of the second data signal is earlier than the first timing determined based on a slot available for repetition transmission of the first data signal.

In an embodiment of the present disclosure, the control circuitry determines that the scheduling is not the defined scheduling when the second timing determined based on a slot available for repetition transmission of the second data signal is earlier than the first timing determined based on a slot actually used for repetition transmission of the first data signal.

In an embodiment of the present disclosure, the control circuitry determines that the scheduling is not the defined scheduling when the second timing determined based on a slot actually used for repetition transmission of the second data signal is earlier than the first timing determined based on a slot actually used for repetition transmission of the first data signal.

A base station according to an embodiment of the present disclosure includes: transmission circuitry, which, in operation, transmits first control information scheduling a first data signal and transmits second control information scheduling a second data signal later than the first control information for the first data signal and the second data signal, at least one of the first data signal and the second data signal being transmitted repeatedly; and control circuitry, which, in operation, determines whether the scheduling is defined scheduling, based on a first timing for a reception of the first data signal and a second timing for a reception of the second data signal.

In a communication method according an embodiment of the present disclosure, a terminal receives first control information that schedules a first data signal and receiving second control information that schedules a second data signal later than the first control information for the first data signal and the second data signal, at least one of the first data signal and the second data signal being transmitted repeatedly, and determines whether the scheduling is defined scheduling, based on a first timing for a transmission of the first data signal and a second timing for a transmission of the second data signal.

In a communication method according an embodiment of the present disclosure, a base station transmits first control information that schedules a first data signal and transmitting second control information that schedules a second data signal later than the first control information for the first data signal and the second data signal, at least one of the first data signal and the second data signal being transmitted repeatedly, and determines whether the scheduling is a defined scheduling, based on a first timing for a reception of the first data signal and a second timing for a reception of the second data signal.

The disclosure of Japanese Patent Application No. 2022-070126, filed on April 21, 2022, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

## Claims

1. A terminal, comprising:
reception circuitry, which, in operation, receives first control information scheduling a first data signal and receives second control information scheduling a second data signal later than the first control information for the first data signal and the second data signal, at least one of the first data signal and the second data signal being transmitted repeatedly; and
control circuitry, which, in operation, determines whether the scheduling is defined scheduling, based on a first timing for a transmission of the first data signal and a second timing for a transmission of the second data signal.

2. The terminal according to claim 1, wherein
the first timing is determined based on an uplink slot available for repetition transmission of the first data signal.

3. The terminal according to claim 1, wherein
the first timing does not depend on an operation in which a transmission of the first data signal is not performed in any of uplink slots available for repetition transmission of the first data signal.

4. The terminal according to claim 1, wherein
the first timing is determined based on an uplink slot actually used for repetition transmission of the first data signal.

5. The terminal according to claim 1, wherein
the second timing is determined based on information on a timing from a slot in which the second control information is received to a slot in which the second data signal is transmitted.

6. The terminal according to claim 1, wherein
the second timing is determined based on an uplink slot that is available for repetition transmission of the second data signal.

7. The terminal according to claim 1, wherein
the second timing is determined based on an uplink slot actually used for repetition transmission of the second data signal.

8. The terminal according to claim 1, wherein:
the control circuitry determines that the scheduling is not the defined scheduling when the second timing determined based on information on a timing from a slot in which the second control information is received to a slot in which the second data signal is transmitted is earlier than the first timing determined based on a slot available for repetition transmission of the first data signal.

9. The terminal according to claim 1, wherein
the control circuitry determines that the scheduling is not the defined scheduling when the second timing determined based on information on a timing from a slot in which the second control information is received to a slot in which the second data signal is transmitted is earlier than the first timing determined based on a slot actually used for repetition transmission of the first data signal.

10. The terminal according to claim 1, wherein
the control circuitry determines that the scheduling is not the defined scheduling when the second timing determined based on a slot available for repetition transmission of the second data signal is earlier than the first timing determined based on a slot available for repetition transmission of the first data signal.

11. The terminal according to claim 1, wherein
the control circuitry determines that the scheduling is not the defined scheduling when the second timing determined based on a slot actually used for repetition transmission of the second data signal is earlier than the first timing determined based on a slot available for repetition transmission of the first data signal.

12. The terminal according to claim 1, wherein
the control circuitry determines that the scheduling is not the defined scheduling when the second timing determined based on a slot available for repetition transmission of the second data signal is earlier than the first timing determined based on a slot actually used for repetition transmission of the first data signal.

13. The terminal according to claim 1, wherein
the control circuitry determines that the scheduling is not the defined scheduling when the second timing determined based on a slot actually used for repetition transmission of the second data signal is earlier than the first timing determined based on a slot actually used for repetition transmission of the first data signal.

14. A base station, comprising:
transmission circuitry, which, in operation, transmits first control information scheduling a first data signal and transmits second control information scheduling a second data signal later than the first control information for the first data signal and the second data signal, at least one of the first data signal and the second data signal being transmitted repeatedly; and
control circuitry, which, in operation, determines whether the scheduling is defined scheduling, based on a first timing for a reception of the first data signal and a second timing for a reception of the second data signal.

15. A communication method, comprising:
receiving, by a terminal, first control information that schedules a first data signal and receiving second control information that schedules a second data signal later than the first control information for the first data signal and the second data signal, at least one of the first data signal and the second data signal being transmitted repeatedly; and
determining, by the terminal, whether the scheduling is defined scheduling, based on a first timing for a transmission of the first data signal and a second timing for a transmission of the second data signal.

16. A communication method, comprising:
transmitting, by a base station, first control information that schedules a first data signal and transmitting second control information that schedules a second data signal later than the first control information for the first data signal and the second data signal, at least one of the first data signal and the second data signal being transmitted repeatedly; and
determining, by the base station, whether the scheduling is a defined scheduling, based on a first timing for a reception of the first data signal and a second timing for a reception of the second data signal.

17. An integrated circuit that controls a process of a terminal, the process comprising:
receiving first control information that schedules a first data signal and receives second control information that schedules a second data signal later than the first control information for the first data signal and the second data signal, at least one of the first data signal and the second data signal being transmitted repeatedly; and
determining whether the scheduling is defined scheduling, based on a first timing for a transmission of the first data signal and a second timing for a transmission of the second data signal.

18. An integrated circuit that controls a process of a base station, the process comprising:
transmitting first control information that schedules a first data signal and transmits second control information that schedules a second data signal later than the first control information for the first data signal and the second data signal, at least one of the first data signal and the second data signal being transmitted repeatedly; and
determining whether the scheduling is defined scheduling, based on a first timing for a reception of the first data signal and a second timing for a reception of the second data signal.
